# FASCICULE DE BREVET EUROPEEN

(11) **EP 0 605 291 B1**
(45) Date de publication et mention de la délivrance du brevet: **25.03.1998**
(21) Numéro de dépôt: 93403119.6
(22) Date de dépôt: 21.12.1993
(51) Int. Cl.: B01D 53/38, B01D 53/44

(54) **Dispositif de désodorisation, par destruction catalytique des espèces organiques présentes dans l'air à épurer**
Vorrichtung zum Desodorieren, durch katalytischen Abbau von organischen Verunreinigungen in zu reinigender Luft
Deodorisation device, by catalytic destruction of organic compounds in air to be purified

(30) Priorité: 30.12.1992 FR 9215944
(43) Date de publication de la demande: 06.07.1994
(73) Titulaire: PRODUITS BERGER S.A., 75001 Paris (FR)
(72) Inventeur: Auvray, Philippe, 27310 Bourg Achard (FR); Le Monies de Sagazan, Bruno, F-76130 Bois Guillaume (FR); Gérard, Corinne, F-27400 Louviers (FR)
(74) Mandataire: Keib, Gérard

(56) Documents cités:
- EP-A- 0 226 203
- WO-A-90/05577
- US-A- 4 234 549

## Description

L'invention concerne l'épuration d'air, notamment la désodorisation des atmosphères ambiantes telles que, par exemple, les atmosphères enfumées.

On connaît, à cet effet, la lampe à brûleur catalytique comprenant un réservoir contenant une composition à base d'alcool isopropylique, parfumée ou non, un brûleur catalytique en céramique imprégnée et une mèche amenant par capillarité la composition au brûleur.

Après allumage et chauffage du brûleur, la flamme est éteinte et la combustion se poursuit par voie catalytique, sans flamme. L'activité catalytique de cette lampe s'explique par une oxydation qui se fait par l'intermédiaire des oxygènes du réseau cristallin. Celui-ci renferme des ions à des degrés d'oxydation supérieurs qui se réduisent en oxydant, outre l'alcool, l'espèce organique présente et se réoxydent par l'intermédiaire du platine.

La désodorisation et la destruction des atmosphères enfumées s'explique par l'addition de plusieurs phénomènes : brassage d'air dû à des perturbations extérieures (déplacement de personnes, mouvements de convection dus à la présence d'un point chaud sur le brûleur), déplacement d'équilibre à proximité du brûleur et apparition d'un gradient de concentration des espèces organiques entraînant une diffusion de celles-ci vers la zone déficitaire en composés organiques.

L'inconvénient de cette lampe réside dans le fait que le brassage de l'air se fait de façon purement passive, naturelle, et qu'il est nécessaire de recharger périodiquement la lampe en alcool pour maintenir le brûleur catalytique à sa température de fonctionnement optimale, à laquelle il assure la destruction des espèces organiques présentes dans l'air vicié.

Ainsi, si l'on dose, par une méthode polarographique, la nicotine présente dans une atmosphère enfumée, après 30 minutes d'utilisation de la lampe on ne montre qu'une baisse de 30% de la teneur en nicotine.

L'un des buts de l'invention est de pallier ces inconvénients, en proposant un dispositif qui procure une efficacité très substantiellement renforcée par rapport à une lampe à alcool et qui, d'autre part, ne nécessite pas de recharge périodique en carburant liquide pour l'entretien de son activité catalytique.

Dans le domaine de l'épuration et désodorisation catalytique de gaz, on connait par EP-A-0 226 203 un dispositif comportant :
- un élément tubulaire contenant un bloc catalytique perméable au gaz, interposé dans le trajet d'air à l'intérieur de l'élément tubulaire et constitué d'un lit catalytique ;
- des moyens de chauffage du bloc catalytique pour chauffer le gaz au moins à la température de début de la destruction catalytique des substances à éliminer ;
- des moyens formant ventilateur pour provoquer une circulation forcée du gaz dans le tube à travers le bloc catalytique.

L'invention propose un dispositif de ce type tel que dèfini par les revendications.

Avantageusement :
- il est prévu un élément dissipateur de chaleur interposé entre l'élément tubulaire et les moyens ventilateurs.
- il est en outre prévu, en aval de l'élément tubulaire, un élément formant bloc de parfumage.

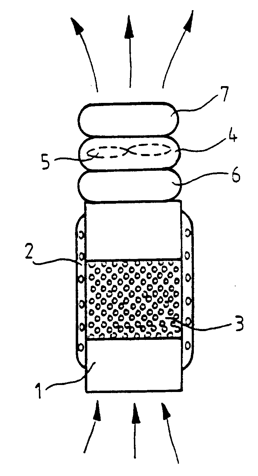

D'autres caractéristiques et avantages de l'invention apparaîtront à la lecture de la description détaillée ci-dessous d'un exemple de réalisation, faite en référence à la figure unique annexée, qui représente schématiquement la configuration du dispositif de l'invention.

Le dispositif de l'invention comporte essentiellement un manchon tubulaire 1 en matériau conducteur de la chaleur, par exemple en quartz ou en céramique, entouré par un moyen de chauffage 2, par exemple électrique.

Ce manchon 1 est partiellement ou totalement rempli d'une masse particulaire 3 formant bloc en matériau perméable à l'air sous la forme d'un tamis moléculaire d'une zéolite, imprégné d'un agent catalyseur à base de platine et/ou palladium et/ou rhodium. Le métal noble constituant, le cas échéant, le catalyseur proprement dit est par exemple amené par imprégnation d'un sel en solution liquide, réduit par chauffage. Ces opérations sont connues de longue date et ne seront pas décrites en détail.

Pour forcer la circulation de l'air au travers du manchon 1, il est prévu un bloc 4 contenant un ventilateur 5 ; un élément dissipateur de chaleur 6 est interposé entre le manchon chauffé 1 et le bloc 4 afin d'éviter tout endommagement de celui-ci.

Enfin, il peut être prévu, de façon optionnelle, un bloc de parfumage 7, disposé bien entendu en aval du manchon contenant le bloc.

La mise en évidence de l'efficacité du dispositif de l'invention s'est déroulée de la façon suivante : une pièce de 17 m³ étanche a été enfumée (23 cigarettes) grâce à une machine à fumer, en 12 minutes. Des prélèvements de l'atmosphère enfumée ont été effectués soit par prélèvement direct de l'air de la pièce, soit par prélèvement de l'air de la pièce après son traitement par le dispositif de l'invention.

Les matériaux utilisés pour ce dispositif étaient les suivants : tube en quartz de diamètre 3,2 cm et longueur 30 cm, et tamis moléculaire de taille de pore 1 nm, de diamètre 2 mm, et de poids 35 g.

Les prélèvements ont été réalisés sur un support solide du type "Tenax" et ont duré une heure après que la dernière cigarette allumée ait été entièrement consumée. Le volume d'air prélevé a été de 7 l. Ces prélèvements ont été analysés par chromatographie en phase gazeuse couplée à un détecteur de masse, le chromatographe possédant un système d'injection à désorption thermique.

Les résultats d'analyse directe de l'atmosphère enfumée ont montré la présence de nombreux composés, alors que les résultats d'analyse de l'air prélevé après passage à travers le dispositif de l'invention révèlent l'absence de tout composé issu de la fumée de cigarette. Ceci démontre une totale efficacité de ce dispositif dans la destruction des produits organiques polluants.

Outre cet essai en situation réelle, il a été mené parallèlement une autre étude consistant à mettre en évidence l'efficacité de l'invention. Au dispositif décrit précédemment, on a ajouté en amont un module contenant une nacelle à l'intérieur de laquelle a été déposé 0,1 g de nicotine. La nicotine vaporisée à 100°C a été entraînée par de l'air à un débit de 7 l/h. L'air passant à travers les particules de silicate du bloc catalyseur a été piégé sur le support solide précité ("Tenax"). La durée du prélèvement a été d'une heure. Ce prélèvement a été analysé selon la méthode décrite précédemment, et les résultats ont révélé l'absence de nicotine et de tout composé issu de la dégradation de la nicotine.

## Revendications

1. Dispositif d'épuration d'air, notamment de désodorisation, par destruction catalytique des substances organiques présentes dans l'air vicié à épurer, ce dispositif comportant:
- un élément tubulaire (1) contenant un bloc catalytique (3) perméable à l'air, interposé dans le trajet d'air à l'intérieur de l'élément tubulaire et constitué d'un lit catalytique;
- des moyens de chauffage (2) du bloc catalytique (3) pour chauffer l'air vicié au moins à la température de début de la destruction catalytique desdites substances organiques;
- des moyens formant ventilateur (5), pour provoquer une circulation forcée de l'air dans le tube (1) à travers le bloc catalytique (3);
caractérisé en ce que :
(a) le bloc catalytique est un tamis moléculaire constitué de billes de zéolite de diamètre 2 mm la zéolite présentant une taille de pores de 1 nm, et étant imprégnée d'un catalyseur;
(b) le catalyseur imprégnant ce tamis moléculaire est un métal du groupe comprenant le platine, le palladium et le rhodium, ou un alliage ou mélange binaire ou ternaire de ces métaux;
(c) les moyens de chauffage (2) entourent l'élément tubulaire (1);
(d) les moyens formant ventilateur (5) sont disposés en aval du bloc catalytique (3) et sont adaptés à aspirer en permanence de l'air à un débit prédéterminé.

2. Dispositif de désodorisation d'air selon la revendication 1, dans lequel il est prévu un élément dissipateur de chaleur (6) entre l'élément tubulaire (1) et les moyens formant ventilateur (5).

3. Dispositif de désodorisation d'air selon la revendication 1 ou 2, dans lequel il est en outre prévu, en aval de l'élément tubulaire, un élément formant bloc de parfumage (7).

## Claims

1. An air purification device, in particular for deodorization by catalytic destruction of organic items present in the polluted air to be purified this device comprising :
- a tubular element (1) containing a catalytic block (3) permeable to air, interposed in the air path inside the tubular element and constituted by a catalytic bed;
- means (2) for heating the catalytic block (3) for heating the polluted air at least to the starting temperature of the catalytic destruction of the said organic substances;
- means forming a fan (5), for producing a forced circulation of air in the tube (1) through the catalytic block (3);
characterized in that
(a) the catalytic block is a molecular sieve constituted by balls of zeolite with a diameter of 2 mm, the zeolite having a size of the pores of 1 nm, and being impregnated by a catalyst;
(b) the catalyst impregnating this molecular sieve is a metal from the group including platinum, palladium and rhodium, or an alloy or a binary or ternary mixture of these metals;
(c) the heating means (2) surround the tubular element (1);
(d) the means forming the fan (5) are disposed downstream from the catalytic block (3) and are capable of constantly drawing the air at a predetermined rate of flow.

2. An air deodorization device according to claim 1, wherein a heat-dissipating element (6) is provided between the tubular element (1) and the means forming the fan (5).

3. An air deodorization device according to claim 1 or 2, wherein there is, moreover, provided a perfuming block (7) downstream from the tubular element.

## Patentansprüche

1. Vorrichtung zur Luftreinigung, insbesondere zur Desodorisation, durch katalytische Zerstörung in der zu reinigenden, verbrauchten Luft vorhandener organischer Stoffe, aufweisend:
- ein röhrenförmiges Bauteil (1), das einen luftdurchlässigen Katalysatorblock (3) enthält, der im Inneren des röhrenförmigen Bauteiles in den Luftweg eingebaut ist und aus einer Katalysatorschicht besteht,
- Heizmittel (2) für den Katalysatorblock (3), zur Erwärmung der verbrauchten Luft mindestens auf die Temperatur des Beginns der katalytischen Zerstörung der genannten organischen Substanzen,
- einen Ventilator darstellende Mittel (5) zur Erzeugung einer erzwungenen Luftzirkulation im Rohr (1) und durch den Katalysatorblock(3),
dadurch gekennzeichnet, daß
(a) der Katalysatorblock ein aus Zeolithkugeln mit einem Durchmesser von 2 mm bestehendes Molekularsieb ist, wobei das Zeolith eine Porengröße von 1 nm aufweist und mit einer Katalysatormischung getränkt ist,
(b) der dieses Molekularsieb tränkende Katalysator ein Metall der Platin, Palladium und Rhodium umfassenden Gruppe oder eine Legierung oder Mischung aus zwei oder drei dieser Metalle ist,
(c) die Heizmittel das röhrenförmige Bauteil (1) umgeben,
(d) die einen Ventilator bildenden Mittel (5) hinter dem Katalysatorblock (3) angeordnet sind und dafür eingerichtet sind, die Luft laufend mit einer vorbestimmten Durchflußmenge anzusaugen.

2. Vorrichtung zur Luftreinigung nach Patentanspruch 1, in der ein Wärmeverteilerbauteil (6) zwischen dem röhrenförmigen Bauteil (1) und den einen Ventilator bildenden Mitteln (5) vorgesehen ist.

3. Vorrichtung zur Luftreinigung nach Patentanspruch 1 oder 2, in der außerdem hinter dem röhrenförmigen Bauteil ein Bauteil vorgesehen ist, das einen Parfümierblock (7) bildet.
